# EUROPÄISCHE PATENTANMELDUNG

(11) **EP 1 271 108 A2**
(43) Veröffentlichungstag der Anmeldung: **02.01.2003**
(21) Anmeldenummer: 02011214.0
(22) Anmeldetag: 21.05.2002
(51) Int. Cl.: G01D 11/24

(54) **Vorrichtung zur Befestigung eines Magnetfeldsensors**

(30) Priorität: 19.06.2001 DE 10129222
(71) Anmelder: SIEMENS AKTIENGESELLSCHAFT, 80333 München (DE)
(72) Erfinder: Skarpil, Harry, 65824 Schwalbach (DE); Sopp, Dirk Peter, 56348 Bornich (DE)

(57) **Zusammenfassung**

Ein Magnetfeldsensor hat ein Trägerelement (1) aus Metall, an welchem ein Halter (2) mit einem Sensorelement (3) in einer festgelegten Position fixiert ist. Hierzu greift der Halter (2) mit Widerhaken (11) aufweisenden Haltezungen (9, 10) in Ausnehmungen (12, 13) des Halters (2). Zwischen dem Halter (2) und dem Trägerelement (1) besteht durch Anlage des Halters (2) an eine Anschlagfläche (14) der Haltezunge (9, 10) ein von einer Umspritzung (16), die auch den übrigen Halter (2) hermetisch umschließt, ausgefüllter Zwischenraum (15).

## Beschreibung

Die Erfindung betrifft einen Magnetfeldsensor mit einem Trägerelement aus Metall, an welchem ein Halter mit einem Sensorelement in einer festgelegten Position fixiert und durch eine Umspritzung dichtend mit dem Trägerelement verbunden ist. Weiterhin betrifft die Erfindung ein Verfahren zur Herstellung eines solchen Magnetfeldsensors.

Magnetfeldsensoren der vorstehenden Art werden beispielsweise in Kraftfahrzeugen eingesetzt, um die Drehzahl der Fahrzeugräder zu überwachen, damit beim Bremsen auftretender Bremsschlupf erkannt und die Bremskraft entsprechend geregelt werden kann oder um beim Beschleunigen das Durchdrehen angetriebener Räder zu verhindern. Üblicherweise sind solche Magnetfeldsensoren mit einem fest angeordneten Hallelement ausgestattet, vor dem sich ein magnetischer Encoder mit der Drehzahl des Rades dreht. Wichtig für die Funktion ist dabei, dass das Hallelement eine sehr genau festgelegte Position zum Encoder hat.

Problematisch ist bei solchen Magnetfeldsensoren vielfach, dass diese an Stellen angeordnet werden müssen, an denen Schmutz und Feuchtigkeit im erhöhten Maße und unvermeidlich auftritt. Bei Kraftfahrzeugen müssen solche Magnetfeldsensoren beispielsweise im Radlagerbereich angeordnet werden. Als Schutz vor Schmutz und Feuchtigkeit hat sich das Umspritzen von Bauteilen bewährt. Deshalb wurde bereits daran gedacht, in einer Spritzgießform den Halter mit dem Träger relativ zu einem Trägerelement zu fixieren und dann die Umspritzung vorzunehmen. Dabei tritt jedoch das Problem auf, dass aufgrund der Drücke in der Spritzgießform beim Spritzen die Gefahr besteht, dass der Träger sich relativ zum Trägerelement verlagert, so dass die genaue Ausrichtung des Sensorelementes verlorengeht. Eine Fixierung des Trägers durch Abstützungen in der Spritzgießform scheidet jedoch aus, weil dann die Stifte offene Verbindungen zu dem Halter bilden würden.

Der Erfindung liegt das Problem zugrunde, einen Magnetfeldsensor der eingangs genannten Art so zu gestalten, dass ein dichtes Umspritzen des das Sensorelement aufnehmenden, an einem Trägerelement fixierten Halters in einer Spritzgießform möglich wird, ohne dass dabei die Gefahr einer Verlagerung des Halters relativ zu dem Trägerelement besteht. Weiterhin soll ein Verfahren zur Herstellung eines solchen Magnetfeldsensors geschaffen werden.

Das erstgenannte Problem wird erfindungsgemäß dadurch gelöst, dass der Halter mit zumindest einer Widerhaken aufweisenden Haltezunge in eine Ausnehmung des Halters greift und dass zwischen dem Halter und dem Trägerelement durch Anlage des Halters an eine Anschlagfläche der Haltezunge ein von der Umspritzung ausgefüllter Zwischenraum besteht.

Bei einem solchen Magnetfeldsensor führt die in der Spritzgießform erzeugte Umspritzung des Halters mit dem Sensorelement zu einer völligen Abdichtung des Sensorelementes, da aufgrund des Zwischenraumes zwischen dem Halter und dem Trägerelement alle Seiten des Halters umspritzt werden können. Dadurch kann der Magnetfeldsensor ohne Probleme auch dort eingesetzt werden, wo er im hohen Maße der Einwirkung von Feuchtigkeit und Schmutz ausgesetzt ist. Durch die Fixierung des Halters mittels zumindest einer Widerhaken aufweisenden Haltezunge wird erreicht, dass der Halter und damit auch das Sensorelement seine Position auf dem Trägerelement beim Umspritzen nicht verändert.

Der Magnetfeldsensor ist für den Einsatz als Radlagersensor in Kraftfahrzeugen optimal gestaltet, wenn gemäß einer vorteilhaften Weiterbildung der Erfindung das Trägerelement ringförmig ausgebildet ist und zum Befestigen durch Aufschieben auf ein zylindrisches Bauteil eine Mantelfläche und daran anschließend eine radial nach innen gerichtete ringförmige Stirnfläche hat, auf der der Halter befestigt ist.

Die Fixierung des Halters auf dem Trägerelement stellt zwangsläufig nicht nur einen genauen axialen Abstand sicher, sondern sorgt auch für eine genau festgelegte Winkelausrichtung, wenn gemäß einer anderen Weiterbildung der Erfindung das Trägerelement in seiner ringförmigen Stirnfläche eine in Umfangsrichtung sich erstreckende Aussparung aufweist, an deren entgegengesetzten Enden jeweils eine Haltezunge vorgesehen ist, und wenn der Halter diese Aussparung überbrückt.

Eine besonders hohe Haltekraft gegen ein Freikommen des Halters vom Trägerelement ergibt sich, wenn die Haltezungen ein Tannenbaumprofil aufweisen.

Eine vollflächig zu beiden Seiten des Halters auf dem Trägerelement aufliegende Umspritzung ist zuverlässig mit dem Trägerelement verbunden, wenn die ringförmige Stirnfläche in Axialrichtung weisende Ausklinkungen aufweist, welche in seitlich zu dem Halter liegende Bereiche der Umspritzung eingreifen. Diese Ausklinkungen bilden Verankerungselemente und halten dadurch die Umspritzung.

Der genaue Abstand zwischen dem Sensorelement und dem Trägerelement und damit die Größe des Luftspaltes zwischen einem Encoder und dem Sensorelement bei fertig montierten Magnetfeldsensoren lässt sich auf einfache Weise sicherstellen, wenn die Anschlagfläche die vordere Stirnfläche der jeweiligen Haltezunge ist.

Das zweitgenannte Problem, nämlich die Schaffung eines Verfahrens zur Herstellung eines Magnetfeldsensors durch Umspritzen eines ein Sensorelement enthaltenden Trägers, welcher auf einem Trägerelement aus Metall fixiert ist, wird erfindungsgemäß dadurch gelöst, dass der Halter mit geringem Abstand zu dem Trägerelement mittels zumindest einer Widerhaken aufweisenden, in eine Ausnehmung des Halters eingreifenden Haltezunge des Trägerelementes auf diesem Trägerelement unter Bildung eines Zwischenraumes zwischen dem Halter und dem Trägerelement fixiert wird.

Durch diese Verfahrensweise wird ein vollständiges Umspritzen des auf dem Trägerelement fixierten Halters mit dem Sensorelement möglich, so dass sich eine absolut sichere Dichtheit ergibt. Weiterhin wird durch die Widerhaken des Trägerelementes oder der Trägerelemente erreicht, dass der Halter sich durch die Einwirkung der mit hohem Druck in die Spritzgießform eingebrachten Kunststoffmasse nicht relativ zu dem Trägerelement verschieben kann.

Die Erfindung lässt verschiedene Ausführungsformen zu. Zur weiteren Verdeutlichung ihres Grundprinzips ist eine erfindungsgemäße Vorrichtung schematisch in der Zeichnung dargestellt und wird nachfolgend beschrieben. In ihr zeigen die
- Fig.1: eine teilweise geschnittene Seitenansicht eines Teilbereiches eines Magnetfeldsensors nach der Erfindung,
- Fig.2: eine schematische Darstellung eines horizontalen Schnitts durch den Magnetfeldsensor,
- Fig.3: eine Vorderansicht eines Teilbereiches eines Trägerelementes des Magnetfeldsensors.

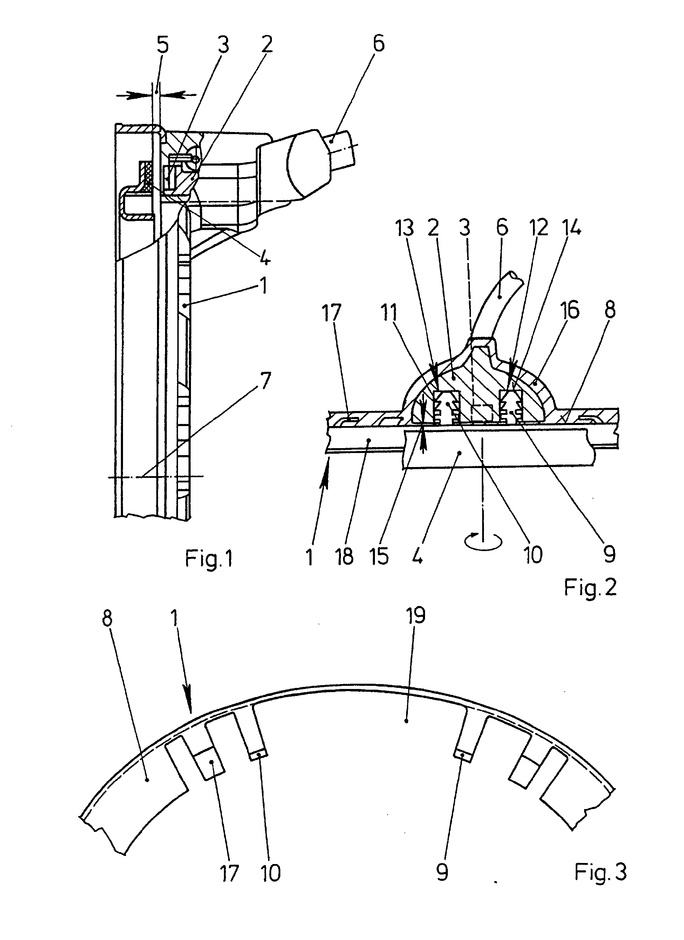

Die Figur 1 zeigt teilweise ein ringförmiges Trägerelement 1 aus Blech, auf welchem ein Halter 2 mit einem Sensorelement 3 befestigt ist. Dem Sensorelement 3 gegenüber liegt ein Encoder 4. Zwischen dem Encoder 4 und dem Sensorelement 3 besteht ein Luftspalt 5, dessen Größe sehr genau eingehalten werden muss. Vom Halter 2 führt ein Kabel 6 weg zu einer nicht gezeigten, elektronischen Signalverarbeitung. Während das Trägerelement 1 unverdrehbar zu montieren ist, wird der Encoder 4 so angeordnet, dass er sich um eine Achse 7 koaxial zu dem Trägerelement 1 mit der durch das Sensorelement 3 zu bestimmenden Drehzahl dreht.

Die Figur 2 zeigt schematisch einen Teilbereich des Trägerelementes 1 und des Encoders 4. Aus einer Stirnfläche 8 des Trägerelementes 1 ragen zwei Haltezungen 9, 10 axial heraus, also in Figur 2 gesehen nach oben, welche jeweils durch eine tannenbaumförmige Ausbildung Widerhaken 11 aufweisen. Die beiden Haltezungen 9, 10 greifen jeweils in eine Ausnehmung 12, 13. Dabei stößt ihr freies Ende mit einer Anschlagfläche 14 gegen den Grund der jeweiligen Ausnehmung 12, 13. Die Länge der Haltezungen 9, 10 ist so bemessen, dass zwischen dem Halter 2 und der Stirnfläche 8 des Trägerelementes 1 ein geringer Zwischenraum 15 verbleibt. Dieser Zwischenraum 15 und die gesamte übrige Oberfläche des Halters 2 mit dem darin eingesetzten Sensorelement 3 sind von einer Umspritzung 16 hermetisch umschlossen. Diese Umspritzung 16 deckt die gesamte Stirnfläche 8 des Trägerelementes 1 ab und ist auf ihr durch ankerartige Ausklinkungen 17 zusätzlich fixiert. Zur Montage in einem Radlager wird das Trägerelement 1 mittels einer umlaufenden Mantelfläche 18 auf einem Radlagerring befestigt.

Die Figur 3 dient der zusätzlichen Verdeutlichung der Gestaltung des Trägerelementes 1. Zu erkennen ist, dass in seiner Stirnfläche 8 eine in Umfangsrichtung sich erstreckende Aussparung 19 vorgesehen ist, an der sich zu beiden Seiten jeweils eine der Haltezungen 9, 10 befindet. Ebenfalls zu erkennen ist in Figur 3 die Ausklinkung 17.

## Patentansprüche

1. Magnetfeldsensor mit einem Trägerelement aus Metall, an welchem ein Halter mit einem Sensorelement in einer festgelegten Position fixiert und durch eine Umspritzung dichtend mit dem Trägerelement verbunden ist, **dadurch gekennzeichnet, dass** der Halter (2) mit zumindest einer Widerhaken (11) aufweisenden Haltezunge (9, 10) in eine Ausnehmung (12, 13) des Halters (2) greift und dass zwischen dem Halter (2) und dem Trägerelement (1) durch Anlage des Halters (2) an eine Anschlagfläche (14) der Haltezunge (9, 10) ein von der Umspritzung (16) ausgefüllter Zwischenraum (15) besteht.

2. Magnetfeldsensor nach Anspruch 1, **dadurch gekennzeichnet, dass** das Trägerelement (1) ringförmig ausgebildet ist und zum Befestigen durch Aufschieben auf ein zylindrisches Bauteil eine Mantelfläche (18) und daran anschießend eine radial nach innen gerichtete ringförmige Stirnfläche (8) hat, auf der der Halter (2) befestigt ist.

3. Magnetfeldsensor nach Anspruch 2, **dadurch gekennzeichnet, dass** das Trägerelement (1) in seiner ringförmigen Stirnfläche (8) eine in Umfangsrichtung sich erstreckende Aussparung (19) aufweist, an deren entgegengesetzten Enden jeweils eine Haltezunge (9, 10) vorgesehen ist, und dass der Halter (2) diese Aussparung (19) überbrückt.

4. Magnetfeldsensor nach zumindest einem der vorangehenden Ansprüche, **dadurch gekennzeichnet, dass** die Haltezungen (9, 10) ein Tannenbaumprofil aufweisen.

5. Magnetfeldsensor nach zumindest einem der vorangehenden Ansprüche, **dadurch gekennzeichnet, dass** die ringförmige Stirnfläche (8) in Axialrichtung weisende Ausklinkungen (17) aufweist, welche in seitlich zu dem Halter (2) liegende Bereiche der Umspritzung (16) eingreifen.

6. Magnetfeldsensor nach zumindest einem der vorangehenden Ansprüche, **dadurch gekennzeichnet, dass** die Anschlagfläche (14) die vordere Stirnfläche der jeweiligen Haltezunge (9, 10) ist.

7. Verfahren zur Herstellung eines Magnetfeldsensors durch Umspritzen eines ein Sensorelement enthaltenden Trägers, welcher auf einem Trägerelement aus Metall fixiert ist, **dadurch gekennzeichnet, dass** der Halter mit geringem Abstand zu dem Trägerelement mittels zumindest einer Widerhaken aufweisenden, in eine Ausnehmung des Halters eingreifenden Haltezunge des Trägerelementes auf diesem Trägerelement unter Bildung eines Zwischenraumes zwischen dem Halter und dem Trägerelement fixiert wird.
